# EUROPEAN PATENT APPLICATION

(11) **EP 4 410 869 A1**
(43) Date of publication of application: **07.08.2024**
(21) Application number: 23020064.4
(22) Date of filing: 03.02.2023
(51) Int. Cl.: C08G 77/14, C08G 77/20, C08G 77/46

(54) **NEW FUNCTIONALIZED ORGANOPOLYSILOXANE COMPOUNDS, MANUFACTURING METHOD, AND USES THEREOF**

(71) Applicant: Elkem Silicones France SAS, 69003 Lyon (FR)
(72) Inventor: The designation of the inventor has not yet been filed
(74) Representative: Menville, Laure

(57) **Abstract**

The invention relates to a novel functionalized organopolysiloxane compound having a polysiloxane main chain, (meth)acrylic groups and hydrophilic polyether groups. The invention further relates to a method for manufacturing said functionalized organopolysiloxane, and to its use, as such or in the preparation of silicone gels, rubbers, coatings and emulsions, useful in different applications such as cosmetics, personal care, medical, house care, textile, electronics, coatings, construction, surfactants, antifoams, emulsifiers.

## Description

### Technical Field

The invention relates to novel functionalized organopolysiloxane compounds. More specifically, the invention relates to novel functionalized organopolysiloxane compounds having improved hydrophilic properties, which can be used as such or in the preparation of silicone gels, rubbers, coatings and emulsions, useful in different applications such as cosmetics, personal care, medical, house care, textile, electronics, coatings, construction, surfactants, antifoams, emulsifiers, etc.

### Background of the invention

Functionalized organopolysiloxane compounds are of high interest in many technical fields because of their unique properties. Within the group of functionalized organopolysiloxanes, a focus is made on those containing at the same time non-polymerizable functions and polymerizable functions.

Prior art document US 4,259,467 discloses polysiloxanes compounds containing hydrophilic sidechains and some a free radical polymerizably activated monovalent unsaturated group at terminal position. Prior art document US 2014/0350278 A1 discloses a process of making a polymerizable hybrid polysiloxane. The process includes reacting an organopolysiloxane having an average of at least 3 silicon hydride (SiH) groups per molecule, a polyoxyethylene, and a catalyst. Said process makes it possible to manufacture SiH-Containing Silicone-EO Copolymer with PEO Grafted on Silicone Chain. Prior art document US 2009/0234089 A1 discloses a hydrophilic polysiloxane macromonomer containing polyoxyethylene as a hydrophilic side chains in a polysiloxane main chain. Prior art document EP 3 418 319 A1 discloses a polysiloxane compound containing polyoxyethylene groups and terminal (meth)acrylic groups linked to the silicon atom by a link containing an arylene group. Prior art document US 2016/0311981 A1 discloses a polysiloxane which has polymerizable groups at both terminal places and a hydrophilic side chain, which has an alkyl group having three hydroxyl groups and no ether bond.

It is an object of the present invention to provide new functionalized organopolysiloxane compounds having polyether side chains and (meth)acrylic terminal groups, and a method for making said new functionalized organopolysiloxane compounds.

### Summary of the invention

All these objectives, among others, are achieved by the present invention, which relates to a functionalized organopolysiloxane comprising:
- a units of formula (I): R₃ SiO_{1/2}
- b units of formula (II): R₂ R^{MET} SiO_{1/2}
- c units of formula (III): R₂ R^{PE} SiO_{1/2}
- d units of formula (IV): R₂ SiO_{2/2}
- e units of formula (V): R R^{MET} SiO_{2/2}
- f units of formula (VI): R R^{PE} SiO_{2/2}
wherein
R = a monovalent hydrocarbon group having from 1 to 12 carbon atoms, optionally substituted by one or several halogen atoms, preferably selected from the alkyl groups having from 1 to 8 carbon atoms, such as the methyl, ethyl, propyl or 3,3,3-trifluoropropyl groups, cycloalkyl groups having from 3 to 8 carbon atoms and aryl groups having from 6 to 12 carbon atoms;
R^{MET} = 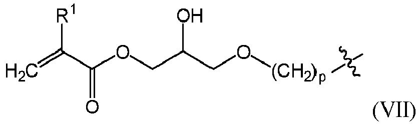 or 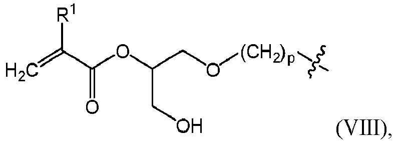
wherein R¹ = -CH₃ or -H, and p is a number such that 2 ≤ p ≤ 10 ;
R^{PE} = -(CH₂)ₘ-O-(C₂H₄O)ₙ-(C₃H₆O)ₒ-R², wherein R² = -H or a monovalent hydrocarbon group having from 1 to 4 carbon atoms, m is a number such that 2 ≤ m ≤ 10, n and o are zero or positive numbers such that 4 ≤ (n+o) ≤ 100, and ;
a, b, c, d, e and f are numbers such that: 0 ≤ a < 2; 0 < b ≤ 2; 0 ≤ c < 2; 10 ≤ d ≤ 500; 0 ≤ e ≤ 100; 1 ≤ f ≤ 100; and (a+b+c)=2.

Another object of the present invention is a method for manufacturing the functionalized organopolysiloxane as disclosed above, wherein said method comprises the following steps: 1) the hydrosilylation of an organohydrogenpolysiloxane compound with an alkenyl glycidyl ether and alkenylpolyether, and 2) the (meth)acrylation on the epoxy function of the glycidyl ether.

Moreover, the present invention further relates to the use of said functionalized organopolysiloxane, as such or in the preparation of silicone gels, rubbers, coatings and emulsions, useful in different applications such as cosmetics, personal care, medical, house care, textile, electronics, coatings, construction, surfactants, antifoams, emulsifiers.

### Detailed description of the invention

In the absence of other indication, the viscosities of the silicone compositions and their individual constituents described herein correspond to a "Newtonian" dynamic viscosity magnitude at indicated temperature, i.e. the dynamic viscosity which is measured, in a manner that is known per se, with a Haak rheometer at a shear rate gradient that is low enough for the measured viscosity to be independent of the shear rate gradient. For example, the viscosity can be measured with a rheometer Haak with conic/plate 60mm geometry, by applying a sinusoidal stress of 1 Pa at 1 Hz.

Unless otherwise specified, the contents in % or ppm are by weight.

The object of the present invention is a functionalized organopolysiloxane comprising:
- a units of formula (I): R₃ SiO_{1/2}
- b units of formula (II): R₂ R^{MET} SiO_{1/2}
- c units of formula (III): R₂ R^{PE} SiO_{1/2}
- d units of formula (IV): R₂ SiO_{2/2}
- e units of formula (V): R R^{MET} SiO_{2/2}
- f units of formula (VI): R R^{PE} SiO_{2/2}
wherein
R = a monovalent hydrocarbon group having from 1 to 12 carbon atoms, optionally substituted by one or several halogen atoms, preferably selected from the alkyl groups having from 1 to 8 carbon atoms, such as the methyl, ethyl, propyl or 3,3,3-trifluoropropyl groups, cycloalkyl groups having from 3 to 8 carbon atoms and aryl groups having from 6 to 12 carbon atoms;
R^{MET} = 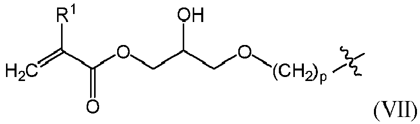 or 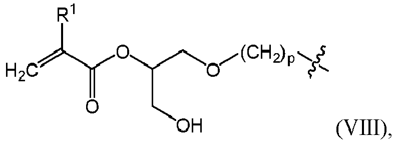
wherein R¹ = -CH₃ or -H, and p is a number such that 2 ≤ p ≤ 10 ;
R^{PE} = -(CH₂)ₘ-O-(C₂H₄O)ₙ-(C₃H₆O)ₒ-R², wherein R² = -H or a monovalent hydrocarbon group having from 1 to 4 carbon atoms, m is a number such that 2 ≤ m ≤ 10, n and o are zero or positive numbers such that 4 ≤ (n+o) ≤ 100, and ;
a, b, c, d, e and f are numbers such that: 0 ≤ a < 2; 0 < b ≤ 2; 0 ≤ c < 2; 10 ≤ d ≤ 500; 0 ≤ e ≤ 100; 1 ≤ f ≤ 100; and (a+b+c)=2.

It is understood that, in formulas (I) to (VI) described above, if several R groups are present, they may be identical to or different than one another.

The R^{MET} group as defined above is a hydroxy-containing (meth)acrylic group that is represented either by formula (VII) or by formula (VIII). For the entire document, it should be understood d that (meth)acrylic groups comprise acrylic groups, methacrylic groups or a mixture of the two. The groups represented by formula (VII) and by formula (VIII) are isomers which might result from the manufacturing step. According to the selected synthetic pathway, R^{MET} can be the group of formula (VII), the group of formula (VIII), or a mixture of both. In case of a mixture, the group of formula (VII) can be the main group, typically above 75%. Within the definition of R^{MET}, p is a number such that 2 ≤ p ≤ 10, preferably 2 ≤ p ≤ 4, and more preferably p = 3

The R^{PE} group as defined above contains a polyether structure, providing interesting hydrophilic properties to the functionalized organopolysiloxane according to the invention. Within the definition of R^{PE}, m is a number such that 2 ≤ m ≤ 10, preferably 2 ≤ m ≤ 4, and more preferably m = 3. Within the definition of R^{PE}, n is the number of oxyethylene (OE) units, and o is the number of oxypropylene (OP) units, (OE) and/or (OP) units forming a polyether side chain. n and o are zero or numbers such that 4 ≤ (n+o) ≤ 100, preferably 5 ≤ (n+o) ≤ 30, and more preferably 6 ≤ (n+o) ≤ 20. According to one embodiment, o is zero, i.e. the R^{PE} group only contains OE units. According to another embodiment, n is zero, i.e. the R^{PE} group only contains OP units. According to another embodiment, n and o are both different from zero, i.e. the R^{PE} group contains both OE and OP units. In that case, the arrangement of the OE units and OP units can be random, or can form blocks, or random and block configurations may coexist.

The functionalized organopolysiloxane according to the present invention comprises at least the units of formula (I) to (VI), and the number of each unit is defined by the numbers a to f respectively. Accord to the present invention, a, b, c, d, e and f are numbers such that such that: 0 ≤ a < 2; 0 < b ≤ 2; 0 ≤ c < 2; 10 ≤ d ≤ 500; 0 ≤ e ≤ 100; 1 ≤ f ≤ 100; and (a+b+c)=2.

Within the definition of the functionalized organopolysiloxane, a is the number of units of formula (I). a is a number such that 0 ≤ a < 2. Preferably, 0 ≤ a ≤ 1. More preferably, 0 ≤ a ≤ 0.5. According to one embodiment, a is zero, i.e. the functionalized organopolysiloxane can be free, or substantially free, of units of formula (I). Nevertheless, traces or non-significant amounts of units of formula (I) might remain.

Within the definition of the functionalized organopolysiloxane, b is the number of units of formula (II). b is a number such that 0 < b ≤ 2. Preferably, 0.5 ≤ b ≤ 2. More preferably, 1 ≤ b ≤ 2.

Within the definition of the functionalized organopolysiloxane, c is the number of units of formula (III). c is a number such that 0 ≤ c < 2. Preferably, 0 ≤ c ≤ 1.5. More preferably, 0.3 ≤ c ≤ 1. According to one embodiment, c is zero, i.e. the functionalized organopolysiloxane can be free, or substantially free, of units of formula (III). According to another embodiment, c is different from zero.

Within the definition of the functionalized organopolysiloxane, d is the number of units of formula (IV). d is a number such that 10 ≤ d ≤ 500. Preferably, 10 ≤ d ≤ 200. More preferably, 20 ≤ d ≤ 100.

Within the definition of the functionalized organopolysiloxane, e is the number of units of formula (V). e is a number such that 0 ≤ e ≤ 100. Preferably, 0 ≤ e ≤ 10. More preferably, 0.1 ≤ e ≤ 5. According to one embodiment, e is zero, i.e. the functionalized organopolysiloxane can be free, or substantially free, of units of formula (V). According to another embodiment, e is different from zero.

Within the definition of the functionalized organopolysiloxane, f is the number of units of formula (VI). f is a number such that 1 ≤ f ≤ 100. Preferably, 1 ≤ f ≤ 50. More preferably, 1 ≤ f ≤ 20.

According to one embodiment, the functionalized organopolysiloxane is such that, preferably, 0 ≤ a ≤ 1; 0.5 ≤ b ≤ 2; 0 ≤ c ≤ 1.5; 10 ≤ d ≤ 200; 0 ≤ e < 10 and 1 ≤ f ≤ 50; and more preferably 0 ≤ a ≤ 0.5; 1 ≤ b ≤ 2; 0.3 ≤ c ≤ 1; 20 ≤ d ≤ 100; 0.1 ≤ e ≤ 5 and 1 ≤ f ≤ 20.

According to one embodiment, a can be 0, i.e. the functionalized organopolysiloxane according to the invention can be substantially free of siloxy units of formula (I). The functionalized organopolysiloxane according to this embodiment advantageously does not comprise non-reactive termination.

According to another embodiment, a and c can be both 0, i.e. the functionalized organopolysiloxane according to the invention can be substantially free of siloxy units of formula (I) and of siloxy units of formula (III) . The functionalized organopolysiloxane according to this embodiment advantageously comprises only (meth)acrylic groups as termination.

According to another embodiment, c and e can be both 0, i.e. the functionalized organopolysiloxane according to the invention can be substantially free of siloxy units of formula (III) and of siloxy units of formula (V). The functionalized organopolysiloxane according to this embodiment can be advantageous since (meth)acrylic groups are only on terminal positions and polyether groups are only pendent groups within the chain.

The content of polyether groups within the functionalized organopolysiloxane has an effect on the hydrophilic property of the polymer. One method to define the content of polyether groups is to calculate the ratio between the weight of polyether chains and the total weight of the polymer. According to one embodiment, the content of polyether groups of the functionalized organopolysiloxane according to the invention is between 10wt.% and 70wt.%, preferably between 30wt.% and 50wt.% (weight of the polyether groups vs. total weight of the polymer).

Preferably, the functionalized organopolysiloxane according to the invention is a linear organopolysiloxane. Consequently, it is preferably free, or substantially free, of siloxy units of formula RSiO_{3/2}, (wherein the symbol R is as described above, commonly referred to as T units), and siloxy unit of formula SiO_{4/2} (commonly referred to as T units).

The functionalized organopolysiloxane according to the invention can have a dynamic viscosity at 25°C of between 100 mPa.s and 50 000 mPa.s, preferably between 500 mPa.s and 10 000 mPa.s, and more preferably between 500 mPa.s and 5 000 mPa.s. Said functionalized organopolysiloxane according to the invention can preferably be referred to as an organopolysiloxane oil.

It is clear for the person skilled in the art that the structure of the functionalized organopolysiloxane according to the invention as defined above is a statistic structure. The arrangement of the siloxy units can be random, or can form blocks, or random and block configurations may coexist. Furthermore, the numbers a to f of each siloxy unit within the functionalized organopolysiloxane are average values, providing therefore an average structure of the functionalized organopolysiloxane. Such average structure can be determined, as commonly known by the person skilled in the art, with the aid of NMR analyses.

The functionalized organopolysiloxane according to the present invention can be manufactured by any process known by the person skilled in the art. According to one embodiment, the functionalized organopolysiloxane according to the invention can be obtained by a two-step process comprising 1) the hydrosilylation of an organohydrogenpolysiloxane compound with an alkenyl glycidyl ether and alkenylpolyether, and 2) the (meth)acrylation on the epoxy function of the glycidyl ether.

More specifically, the functionalized organopolysiloxane according to the invention can be obtained starting from an organohydrogenpolysiloxane compound comprising:
- a units of formula (I): R₃ SiO_{1/2}
- (b+c) units of formula (IX): R₂ H SiO_{1/2}
- d units of formula (IV): R₂ SiO_{2/2}
- (e+f) units of formula (X): R H SiO_{2/2}
wherein R, a, b, c, d, e and f are as defined above.

Said organohydrogenpolysiloxane compound can be purchased from silicone manufacturer or produced according to general methods known by the person skilled in the art.

In a first step, the organohydrogenpolysiloxane compound can be reacted with an alkenyl glycidyl ether and an alkenylpolyether, via an hydrosilylation reaction, said alkenyl glycidyl ether being selected from the group consisting of 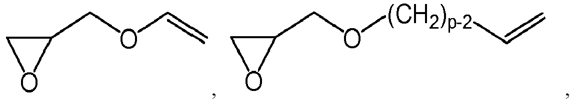 and mixtures thereof, wherein p is as defined above; and
said alkenylpolyether being selected from the group consisting of CH₂=CH-O-(C₂H₄O)ₙ-(C₃H₆O)ₒ-R², CH₂=CH-(CH₂)ₘ₋₂-O-(C₂H₄O)ₙ-(C₃H₆O)ₒ-R², and mixtures thereof, wherein R², n, o and m are as defined above.

The alkenyl glycidyl ether is preferably the allylglycidyl ether.

The alkenylpolyether is preferably the allylpolyether of formula CH₂=CH-CH₂-O-(C₂H₄O)ₙ-(C₃H₆O)ₒ-R², wherein R², n and o are as defined above.

The reaction with the alkenyl glycidyl ether and with an alkenylpolyether can be carried out simultaneously or sequentially. According to one embodiment, the reaction can be carried out sequentially by first reacting the organohydrogenpolysiloxane compound with the alkenyl glycidyl ether, and then adding the alkenylpolyether.

The temperature of the hydrosilylation can be comprised between 0°C and 150°C, preferably between 20°C and 100°C, in the presence of a hydrosilylation catalyst.

The hydrosilylation catalyst can in particular be selected from platinum and rhodium compounds but also from silicon compounds, such as those described in the patent applications WO 2015/004396 and WO 2015/004397, germanium compounds, such as those described in the patent application WO 2016/075414, or nickel, cobalt or iron complexes, such as those described in the patent applications WO 2016/071651, WO 2016/071652 and WO 2016/071654. The catalyst is preferably a compound derived from at least one metal belonging to the platinum group. These catalysts are well known. It is possible in particular to use complexes of platinum and of an organic product described in the patents US 3,159,601, US 3,159,602 and US 3,220,972 and the European patents EP 0057459, EP 0188978 and EP 0190530, or the complexes of platinum and of vinylated organosiloxanes described in the patents US 3,419,593, US 3,715,334, US 3,377,432 and US 3,814,730. Preferentially, the hydrosilylation catalyst is a compound derived from platinum. Preferentially, the hydrosilylation catalyst is a Karstedt platinum catalyst.

The amount of the hydrosilylation catalyst can be preferably in the range from 2 ppm to 400 ppm, preferably from 5 ppm to 200 ppm, calculated as weight of platinum metal, with respect to the total weight of the reaction medium.

Preferably, the contents of alkenyl glycidyl ether and alkenylpolyether are such that, for 1 molar equivalent of SiH groups within the organohydrogenpolysiloxane compound, the reaction is carried out with an excess of alkenyl glycidyl ether and alkenylpolyether. When hydrosilylation reaction is completed, the excess unreacted of alkenyl glycidyl ether and/or alkenylpolyether, and optionally non-reactive silicone volatiles, can be distilled out or stripped, typically using vacuum.

An intermediate functionalized organopolysiloxane compound can be obtained at the end of hydrosilylation step 1). Said intermediate compound is similar to the functionalized organopolysiloxane according to the present invention since it comprises:
- a units of formula (I): R₃ SiO_{1/2}
- c units of formula (III): R₂ R^{PE} SiO_{1/2}
- d units of formula (IV): R₂ SiO_{2/2}
- f units of formula (VI): R R^{PE} SiO_{2/2},
but the siloxy units of formula (II) and (V) are replaced by:
- b units of formula (XI): R₂ R^{EPOX} SiO_{1/2}
- e units of formula (XII): R R^{EPOX} SiO_{2/2}

wherein R, R^{PE}, a, b, c, d, e and f are as defined above, and
R^{EPOX} = 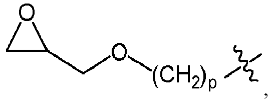 wherein p is as defined above.

The second step of the process for obtaining the functionalized organopolysiloxane according to the invention comprises the (meth)acrylation on the epoxy function of the glycidyl ether. (Meth)acrylation by opening of an epoxy group is a reaction which has been often described in the literature.

It is known that organopolysiloxanes comprising a meth(acrylate) function can be industrially obtained by reaction between an epoxy-group-functionalized organopolysiloxane and (meth)acrylic acid in the presence of a chromium-based catalyst. This reaction is for example described in the article "Synthesis and characterization of a vinyl ester resin with an oligo(dimethy1 siloxane) backbone", by Rao et al, Makromol. Chem., Rapid Commun. 7, 703-707 (1986), wherein an organopolysiloxane with chain-end epoxy functions reacts with methacrylic acid in the presence of chromium diisopropyl salicylate so as to form an α,ω-bis(methacrylate)-substituted organopolysiloxane. The patent US 6,548,568 also teaches the preparation of organopolysiloxanes comprising an acrylate function by reaction between an organopolysiloxane having epoxy functions and acrylic acid in the presence of chromium (III) acetate. The reaction was carried out in a solvent, which is a mixture of n-butanol and methyl isobutyl ketone. Hydroquinone is added as polymerization inhibitor of (meth)acrylic acid. More recently, US 10,829,597 describes the use of a complex of chromium in the oxidation state (III) as catalyst, but in the absence of alcohol.

Other types of catalysts are known to catalyze this reaction between an epoxy-group-functionalized organopolysiloxane and (meth)acrylic acid. For instance, patents US 4,293,678, US 4,558,082, US 4,777,233 and US 4,908,274 disclose the use of organic catalysts such as amines (for example tributylamine, trimethylamine, benzyldimethylamine), tetramethylguanidine, tetramethylurea, sulfonic acids (for example p-toluene sulfonic acid and methane sulfonic acid), trifluoroacetic acid or morpholine and its derivatives. For example, a cyclic diamine such as 1,4-diazabicyclo(2,2,2)octane is widely exemplified as catalyst for this reaction. More recently, US 10,738,217 describes the use as catalyst of a complex of iron in the oxidation state (III).

Any method known by the person skilled in the art can be used to carry out the (meth)acrylation step. Typically, the intermediate functionalized organopolysiloxane compound according to the reaction can be reacted, at a temperature of between 25°C and 130°C, preferably between 50°C and 130°C, and even more preferentially between 70°C and 125°C, with acrylic acid or methacrylic acid or a mixture of the two, in the presence of an appropriate catalyst, which is preferably a chromium-based catalyst. The reaction can be carried out using at least one, preferably one to ten, mole (meth)acrylic acid per one mole epoxy groups in said intermediate functionalized organopolysiloxane compound. In order to prevent reactive group gelation, a polymerization inhibitor can be used, for example, methoxyphenol, phenothiazine, hydroquinone, or tert-butylpyrocatechol.

The functionalized organopolysiloxane according to the present invention is obtained at the end of the (meth)acrylation step 2).

Preferably, additional purification steps can be carried out either between step 1) and step 2), or after step 2), or both.

According to one embodiment, the method for manufacturing the functionalized organopolysiloxane according to the present invention can comprise a purification step 1'), between hydrosilylation step 1) and (meth)acrylation step 2). The purification step 1') can be carried out by any method known by the person skilled in the art, for example by precipitation with organic solvents, such as acetone, filtration and washing, extraction in a suitable solvent, dialysis, reverse osmoses or ultrafiltration, or any combination of these methods. By means of this purification step, the intermediate functionalized organopolysiloxane compound according to the invention can be obtained in a pure form, for example in the form of concentrated solutions that are free, or at least substantially free, from starting materials and/or from secondary products formed during the hydrosilylation step. It is possible for the purification step to be carried out repeatedly, for example from two to ten times. Alternatively, the purification step can be carried out continuously until the selected degree of purity is attained. The selected degree of purity can, in principle, be as high as desired.

According to another embodiment, the method for manufacturing the functionalized organopolysiloxane according to the present invention can comprise a purification step 2') after (meth)acrylation step 2). Typically, the purification step 2') can consist in a devolatilization step, which makes it possible to evaporate off the solvent and the excess (meth)acrylic acid when present. The solvent can optionally be recycled. A devolatilization step can be carried out according to any method know by the person skilled in the art, for instance by distillation at appropriate temperature under reduced pressure. Further filtration step can also be carried out.

The functionalized organopolysiloxane according to the present invention can be of high interest for several technical fields.

When compared with prior art document US 2009/0234089 A1, the functionalized organopolysiloxane according to the present invention at least differs by the link between the polysiloxane main chain and the (meth)acrylic groups: whereas US 2009/0234089 A1 provides a propylene bond, optionally with a few polyoxyethylene groups (m -(C₂H₄O)- groups, wherein m is 0 to 10 in US 2009/0234089 A1), the functionalized organopolysiloxane according to the present invention comprises (meth)acrylic acid monoester comprising a hydroxyl group in the vicinal position. Without wishing to be bound by any theory, it is believed that the presence of a hydroxyl group in the vicinal position of the (meth)acrylic group provides improved properties, for instance improved hydrophilicity.

Additionally, the (meth)acrylate functions are capable of reacting via the radical process under actinic and/or thermal activation according to a polyaddition polymerization mechanism.

Due to the combination of hydrophilic polyether chains in addition to hydrophobic silicone chains, and due to the improved hydrophilic properties, the functionalized organopolysiloxane according to the present invention can be used as such or in the preparation of silicone gels, rubbers, coatings and emulsions, useful in different applications such as cosmetics, personal care, medical, house care, textile, electronics, coatings, construction, surfactants, antifoams, emulsifiers, etc.

In cosmetic and personal care, the functionalized organopolysiloxane according to the present invention is suitable as a constituent or additive for cosmetics, such as hairsprays, creams, lotions, gels, hair conditioner or hair setting composition.

The functionalized organopolysiloxanes are furthermore suitable as release agents and coating materials. They are also suitable for the coating of textile, paper, wood, plastics or sheets and metals. They can be used as adhesion promoters, or as slip agent and wetting agent for paints or varnishes.

Further fields of use are in the building sector as an additive in cement-containing and non-cement-containing systems and for the protection of structures, in particular for the production of weather-resistant coatings or sealing compounds.

Additionally, the functionalized organopolysiloxanes according to the present invention are particularly suitable as hydrophilizing softeners for textiles. Synthetically produced fibers (such as polyester, polyamide or polyolefin fibers) are often so hydrophobic that no water or no perspiration can be absorbed. This very unpleasant property for the wearer of such textiles can be completely eliminated by treatment of the textile fibers or of the textiles with the hydrophilic organofunctional silicone copolymers according to the invention. The textiles are rendered hydrophilic thereby, perspiration can be absorbed and furthermore the textiles acquire a pleasant soft handle. The functionalized organopolysiloxanes are also suitable as an anti-wrinkling agent in the textile sector.

Various embodiments of the present invention can be better understood by reference to the following Examples which are offered by way of illustration. The present invention is not limited to the Examples given herein.

### Examples

### Raw materials:

- Poly(methylhydrogen)(dimethyl)siloxane with SiH groups in-chain and end-chain (α/ω)
- Allyl glycidyl ether (AGE) (from Thermo scientific / 99%+)
- Allylpolyether POLYGLYKOL A500 (from Clariant)
- Karstedt catalyst: Platinum(0)-1,3-divinyl-1,1,3,3-tetramethyldisiloxane (Pt content: 10 wt.%)
- Methacrylic acid (from Sigma Aldrich)
- Chromium(III) acetate (from MinsChem). Cr content: 22wt.%
- 4-methylpentan-2-one (MIBK) (from VWR /GPR RECTAPUR)
- Butanol (from VWR / NORMAPUR)
- 4-Methoxyphenol (MEHQ) (from Solvay)
- Ethanol (from VWR / SUPELCO)

### Step 1: Preparation of [(CH₃)₃ SiO_{1/2} ]_{0.3} [(CH₃)₂ R^{EPOXY} SiO_{1/2}]₁ [(CH₃)₂ R^{PEG11} SiO_{1/2}]_{0.7} [(CH₃)₂ SiO_{2/2}]₂₉ [(CH₃) R^{EPOXY} SiO_{2/2]1} [(CH₃) R^{PEG11} SiO_{2/2}]₆

In a 500 mL agitated reactor under nitrogen, we mixed:
- 125 g of poly(methylhydrogen)(dimethyl)siloxane with SiH groups in-chain and end-chain (α/ω), containing 9,38wt.% of SiH groups (i.e. 321.3 mmol SiH groups for 100 g of polysiloxane), and
- 10.96 g of allyl glycidyl ether (AGE) (0.096 mol).

The temperature was raised to 40°C. 34.6 mg of a Karstedt catalyst solution was added, and the reaction medium was stirred.

The temperature was then raised to 75°C. 209.6 g of allylpolyether A500 was added.

At the end of the reaction, the reaction medium was distilled under vacuum (T=90°C, P=1 mBar).

The product was purified by dialysis, and finally distilled.

The absence of any residue of reactants or solvent was determined by 1H NMR. The content of epoxy groups (0.228 mol/kg) was determined by potentiometric titration.

### Step 2: Preparation of [(CH₃)₃ SiO_{1/2} ]_{0.3} [(CH₃)₂ R^{MET} SiO_{1/2}]1 [(CH₃)₂ R^{PEG11} SiO_{1/2}]_{0.7} 1(CH₃)₂ SiO_{2/2}]₂₉ [(CH₃) R^{MET} SiO_{2/2]1} [(CH₃) R^{PEG11} SiO_{2/2}]₆

In a 150 mL agitated reactor, we mixed:
- 50 g of the intermediate organopolysiloxane obtained at step 1;
- 1.96 g of methacrylic acid;
- 0.013 g of Chromium(III) acetate;
- 0.06 g of MEHQ;
- 5.78 g of MIBK+butanol.

The reaction was carried out at 115°C. When the conversion of the epoxy groups was completed, the mixture was devolatilized. The content of methacrylate function was determined by 1H-NMR.

## Claims

1. A functionalized organopolysiloxane comprising:
- a units of formula (I): R₃ SiO_{1/2}
- b units of formula (II): R₂ R^{MET} SiO_{1/2}
- c units of formula (III): R₂ R^{PE} SiO_{1/2}
- d units of formula (IV): R₂ SiO_{2/2}
- e units of formula (V): R R^{MET} SiO_{2/2}
- f units of formula (VI): R R^{PE} SiO_{2/2}
wherein
R = a monovalent hydrocarbon group having from 1 to 12 carbon atoms, optionally substituted by one or several halogen atoms, preferably selected from the alkyl groups having from 1 to 8 carbon atoms, such as the methyl, ethyl, propyl or 3,3,3-trifluoropropyl groups, cycloalkyl groups having from 3 to 8 carbon atoms and aryl groups having from 6 to 12 carbon atoms;
R^{MET} = 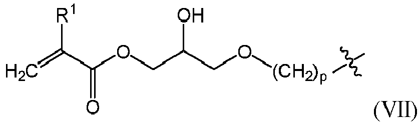 or 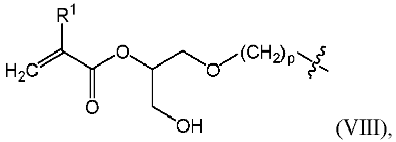
wherein R¹ = -CH₃ or -H, and p is a number such that 2 ≤ p ≤ 10 ;
R^{PE} = -(CH₂)ₘ-O-(C₂H₄O)ₙ-(C₃H₆O)ₒ-R², wherein R² = -H or a monovalent hydrocarbon group having from 1 to 4 carbon atoms, m is a number such that 2 ≤ m ≤ 10, n and o are zero or positive numbers such that 4 ≤ (n+o) ≤ 100, and ;
a, b, c, d, e and f are numbers such that: 0 ≤ a < 2; 0 < b ≤ 2; 0 ≤ c < 2; 10 ≤ d ≤ 500; 0 ≤ e ≤ 100; 1 ≤ f ≤ 100; and (a+b+c)=2.

2. The functionalized organopolysiloxane according to Claim 1, wherein R^{MET} is a mixture of the group of formula (VII) and of the group of formula (VIII), the group of formula (VII) being preferably the main group, more preferably above 75% of the R^{MET} groups are the group of formula (VII).

3. The functionalized organopolysiloxane according to Claim 1 or Claim 2, wherein the functionalized organopolysiloxane is such that 0 ≤ a ≤ 1; 0.5 ≤ b ≤ 2; 0 ≤ c ≤ 1.5; 10 ≤ d ≤ 200; 0 ≤ e ≤ 10 and 1 ≤ f ≤ 50; and more preferably 0 ≤ a ≤ 0.5; 1 ≤ b ≤ 2; 0.3 ≤ c ≤ 1; 20 ≤ d ≤ 100; 0.1 ≤ e ≤ 5 and 1 ≤ f ≤ 20.

4. The functionalized organopolysiloxane according to any one of Claims 1 to 3, wherein the functionalized organopolysiloxane is free or substantially substantially free of siloxy units of formula (I), and preferably a is zero.

5. The functionalized organopolysiloxane according to any one of Claims 1 to 3, wherein the functionalized organopolysiloxane is free or substantially free of siloxy units of formula (I) and of siloxy units of formula (III), and preferably a and c are both zero.

6. The functionalized organopolysiloxane according to any one of Claims 1 to 5, wherein the functionalized organopolysiloxane is free or substantially free of siloxy units of formula (III) and of siloxy units of formula (V), and preferably c and e are both zero.

7. The functionalized organopolysiloxane according to any one of Claims 1 to 6, wherein the content of polyether groups of the functionalized organopolysiloxane according to the invention is between 10wt.% and 70wt.%, preferably between 30wt.% and 50wt.% (weight of the polyether groups vs. total weight of the polymer).

8. A method for manufacturing the functionalized organopolysiloxane according to any one of claims 1 to 7, wherein said method comprises the following steps: 1) the hydrosilylation of an organohydrogenpolysiloxane compound with an alkenyl glycidyl ether and alkenylpolyether, and 2) the (meth)acrylation on the epoxy function of the glycidyl ether.

9. The method according to claim 8, wherein said method additionally comprises a purification step 1'), between hydrosilylation step 1) and (meth)acrylation step 2).

10. The method according to claim 9, wherein the purification step 1') is carried out by precipitation with organic solvents, such as acetone, filtration and washing, extraction in a suitable solvent, dialysis, reverse osmoses or ultrafiltration, or any combination of these methods.

11. The method according to any one of claims 8 to 10, wherein said method additionally comprises a purification step 2') after (meth)acrylation step 2).

12. The method according to claim 11, wherein the purification step 2') consists in a devolatilization step.

13. Use of the functionalized organopolysiloxane according to any one of claims 1 to 7, as such or in the preparation of silicone gels, rubbers, coatings and emulsions, useful in different applications such as cosmetics, personal care, medical, house care, textile, electronics, coatings, construction, surfactants, antifoams, emulsifiers.
